# EUROPEAN PATENT APPLICATION

(11) **EP 4 280 316 A1**
(43) Date of publication of application: **22.11.2023**
(21) Application number: 22174465.9
(22) Date of filing: 20.05.2022
(51) Int. Cl.: H01M 8/0256, H01M 8/0258, H01M 8/0265

(54) **LIGHTWEIGHT AND EFFICIENT BIPOLAR PLATE**

(71) Applicant: Airbus Operations GmbH, 21129 Hamburg (DE)
(72) Inventor: Linde, Peter, 21129 Hamburg (DE); Hegenbart, Matthias, 21129 Hamburg (DE)

(57) **Abstract**

A bipolar plate for a fuel cell stack comprises a first main boundary surface, a second main boundary surface, wherein the first and second main boundary surfaces are arranged parallel and at a distance to each other and define an interior space, wherein a plurality of lateral delimiting surfaces extend between outer edges of the first and second main boundary surfaces to enclose the interior space, wherein at least one of the lateral delimiting surfaces comprises a plurality of lateral openings, wherein the at least one of the main boundary surfaces comprises a plurality of axial openings, wherein a plurality of internal distribution channels are arranged inside the interior space in a distance to the first main boundary surface and the second main boundary surface, and wherein the lateral openings of each of the at least one lateral delimiting surfaces are in fluid connection with the axial openings of one of the at least one main boundary surfaces through at least a part of the internal distribution channels.

## Description

### Technical field

The invention relates to a bipolar plate for a fuel cell stack, a fuel cell stack and an aircraft having at least one such fuel cell stack and/or at least one such bipolar plate.

### Background of the invention

Fuel cells for installation in particular in vehicles are frequently realized in the form of fuel cell stacks in which fuel cells are arranged in adjacent rows in alternating polarity and are electrically connected to one another via conductive bipolar plates. The bipolar plates are furthermore used for distributing oxygen or air and hydrogen to the fuel cells, i.e. membrane-electrode-assemblies arranged between two consecutive bipolar plates, and have a structure of flow channels that are known as "flow fields" for this purpose. The fuel cells of a fuel cell stack are usually clamped together in a stacking direction so as to connect the fuel cells to each other as well as to avoid gas leakage. Since the bipolar plates need to take up compressive stress, the flow channels must be separated by areas that are in contact with the electrodes. At this contact area, no reactant is entering into the electrodes, which may cause a varying degree of non-uniform reactant flow. This may affect the performance of the fuel cell.

To achieve an as uniform reactant flow as possible, the contact area may be reduced. However, this causes an increase in stress on this area, and this stress must be kept in some limits, in order to maintain stability of the bipolar plates. Hence, the distance between the flow channels cannot be made arbitrarily small.

### Summary of the invention

It is thus an object of the invention to propose an alternate bipolar plate for a fuel cell stack, which allows a particularly uniform reactant flow, while leading to reduced mechanical stress.

This object is met by a bipolar plate for a fuel cell stack having the features of claim 1. Advantageous embodiments and further improvements may be gathered from the subclaims and the following description.

A bipolar plate for a fuel cell stack is proposed, the bipolar plate comprising a first main boundary surface, a second main boundary surface, wherein the first and second main boundary surfaces are arranged parallel and at a distance to each other and define an interior space, wherein a plurality of lateral delimiting surfaces extend between outer edges of the first and second main boundary surfaces to enclose the interior space, wherein at least one of the lateral delimiting surfaces comprises a plurality of lateral openings, wherein the at least one of the main boundary surfaces comprises a plurality of axial openings, wherein a plurality of internal distribution channels are arranged inside the interior space in a distance to the first main boundary surface and the second main boundary surface, and wherein the lateral openings of each of the at least one lateral delimiting surfaces are in fluid connection with the axial openings of one of the at least one main boundary surfaces through at least a part of the internal distribution channels.

The bipolar plate comprises a plate shape defined by the first main boundary surface and the second main boundary surface. Both main boundary surfaces are distanced from each other and comprise surface dimensions that clearly exceed their distance. These main boundary surfaces are to be considered outer surfaces that contact membrane-electrode assemblies. Several membrane-electrode assemblies and several bipolar plates are combined to form a fuel cell stack.

The outer edges of the bipolar plate are created by the plurality of lateral delimiting surfaces that extend between the outer edges of the main boundary surfaces. For example, if the main boundaries surfaces are of a rectangular shape, four lateral delimiting surfaces result, which follow on each other in a circumferential direction and enclose an angle of 90° to each other.

A core aspect of the invention lies in the combination of several openings in the main boundary surfaces and lateral delimiting surfaces and internal distribution channels. The internal distribution channels are arranged completely inside the interior space and thus have a distance to both main boundaries surfaces. They extend from lateral openings into the interior space in the direction of an opposite lateral delimiting surface. They may extend completely through the bipolar plate, such that excess reactants may flow out of the bipolar plate on the other side of the bipolar plate and be reused. Hence, substantially identical lateral openings may be arranged on opposite sides of the bipolar plate to allow the reactants to flow through. Axial openings in one of the main boundary surfaces are connected to at least part of the internal distribution channels, such that a fluid communication between the lateral openings and the axial openings is created.

In case the bipolar plate is a first or a last bipolar plate of a fuel cell stack, only one of the main boundary surfaces may comprise axial openings. For all other bipolar plates arranged between the first and the last bipolar plate, both main boundary surfaces comprise axial openings.

An advantage of the design according to the invention lies in the fact that the internal distribution channels can be designed completely independent from the size of lateral and axial openings. Instead of providing a spiral-shaped open groove on the main boundary surfaces depressions, a set of axial openings is provided, wherein the openings can be evenly distributed over the respective main boundary surface to provide a very uniform distribution of the reactants that are supplied into the lateral openings and distributed to the axial openings.

The axial openings may particularly be of a circular shape, such as boreholes.

However, e.g. if the bipolar plate is made in a 3D printing process, the axial openings may have a more complex shape, such as a hexagon or the like. According to the invention, the respective main boundary surface comprises a grid- or sieve-like pattern of axial openings, through which the respective reactant is fed. At the same time, the axial openings may comprise a clearly smaller diameter or width in comparison to common flow fields of common bipolar plates.

Several smaller holes are beneficial out of a strength point-of-view. For fewer and larger holes, the stress concentration factor will be higher, i.e. the stress at the edge of the hole will increase with increasing hole size. For smaller holes, conversely, the stress concentration factor will decrease. For the same contact area, a bipolar plate can take more stress (force per unit area) if the total hole area is distributed over smaller holes. Thus the hole area, i.e. the opening area can be somewhat increased with the given design, and the reactant can be distributed better. At the same time the remaining contact area, although somewhat smaller, has smaller stress concentration factors, and thus can withstand more stress. Hence, distributing the total opening area over a larger number of smaller axial openings, the individual mechanical stresses at edges of the axial openings are reduced. Overall, it is conceivable that the bipolar plate according to the invention may be manufactured through a 3D printing process to allow a more sophisticated design of the internal distribution channels as well as connections between the lateral openings or the axial openings.

The internal distribution channels may comprise a larger diameter than the axial openings for transferring the reactants from the lateral openings, such that the flow resistance can be reduced inside the bipolar plate. In doing so, the reaction time for adapting a variable reactant flow can be clearly reduced. In analogy to the above, the internal distribution channels do not necessarily need a circular cross-section. They may also comprise a hexagonal shape or another complex shape, if the bipolar plate is made in a 3D printing process.

In conclusion, the bipolar plate according to the invention can both provide larger reactant throughput, and better distributed reactant gas. In addition the compressive stress acting on it will be smaller, than if there were a few larger holes or channels. The smaller stress opens up for the possibility for not only better distribution of the gas openings but also for a total larger opening area, i.e. better throughput of gas.

In an advantageous embodiment, a first lateral delimiting surface comprises a plurality of first lateral openings, wherein a second lateral delimiting surface comprises a plurality of second lateral openings, wherein the first main boundary surface comprises a plurality of first axial openings, wherein the second main boundary surface comprises a plurality of second axial openings, wherein first internal distribution channels and second internal distribution channels are arranged inside the interior space, wherein the first lateral openings are connected to the first axial openings through the first internal distribution channels, and wherein the second lateral openings are connected to the second axial openings through the second internal distribution channels. Hence, two independent reactant flows through the bipolar plate are created, which both extend from one of the lateral delimiting surfaces to one of the main boundary surfaces. It is to be understood that the internal distribution channels should not intersect each other.

It is conceivable that a segregation of the first and second internal distribution channels is conducted in a thickness direction of the bipolar plate, such that the first internal distribution channels are placed in a first region and such that the second internal distribution channels are placed in a second region, wherein the first region and the second region follow on each other in the thickness direction.

In an advantageous embodiment, the first lateral delimiting surface and the second lateral delimiting surface follow on each other in a circumferential direction and are arranged at an angle of 60° to 120° to each other. It is particularly preferred to use an angle of 90°, such that the bipolar plate has a rectangular footprint and a cuboid shape. However, as an alternative, also circular bipolar plates are conceivable, wherein a single lateral delimiting surface extending along the whole circumference is divided into several sections, which represent the first and second lateral delimiting surfaces. Still further, other variants are possible, which may be based on a polygon footprint with several lateral delimiting surfaces, depending on the intended shape of the fuel cell stack.

In an advantageous embodiment, the first lateral openings and the first internal distribution channels are arranged further to the first main boundary surface than to the second main boundary surface, wherein the second lateral openings and the second internal distribution channels are arranged further to the second main boundary surface than to the first main boundary surface, and wherein the first internal distribution channels and the second internal distribution channels are arranged at a distance to each other. This leads to the above-mentioned segregation in the interior space that prevents intersections between the internal distribution channels. Furthermore, this leads to reducing the connection length between axial openings and the respective distribution channels.

It is conceivable that first and second internal distribution channels are distributed in several consecutive planes parallel to the first and second main boundary surfaces. The first or second distribution channels may be arranged parallel to each other in a respective one of the planes. Consecutive planes may alternatingly belong to first and second distribution channels.

In an advantageous embodiment, the internal distribution channels associated with the lateral openings of each of the at least one lateral delimiting surfaces are arranged parallel to each other. The internal distribution channels may exemplarily extend directly from the respective lateral openings into the interior channel without bends or kinks. Several lateral openings therefore lead to a strand of several distribution channels extending through the interior space. Thereby, a very low flow resistance is maintained.

In an advantageous embodiment, the internal distribution channels are straight, wherein each associated axial opening of the respective main boundary surface is in fluid connection with the respective internal distribution channel through a branch merging into the respective internal distribution channel. Each internal distribution channel may thus be connected to several axial openings. Thus, each distribution channel may be connected to several consecutive branches leading to an individual axial opening each. The number of axial openings and branches may be chosen in a way to maintain an optimum balance between structural and flow characteristics. Providing several branches to each of the distribution channels leads to a further improved distribution of reactants on the respective main boundary surface.

In an advantageous embodiment, the branch has a curved shape that transitions between an intended flow direction of a respective internal distribution channel and an outflow axis of the respective axial opening. By avoiding a sharp bend the flow resistance is improved. The curved shaped smoothly directs a fraction of the flow from the internal distribution channel to a respective axial opening.

In an advantageous embodiment each lateral opening is associated with one internal distribution channel. Hence, the flow through every lateral opening directly stems from or flows into one of the internal distribution channels. A relatively large number of lateral openings may be provided that have a small diameter, leading to a relatively large number of internal distribution channels. This may lead to a sieve, grid or honeycomb structure inside the interior space that result in a reduced weight and an improved stress behavior.

In an advantageous embodiment, the lateral openings of a respective lateral surface are arranged in a plurality of parallel lateral rows. Thereby, the mass flow of reactant into or out of the respective lateral surface may be further increased. Each one of the rows may comprise a plurality of lateral openings. The lateral openings of adjacent rows may be directly adjacent to each other, thereby forming a regular matrix. However, the rows may be shifted such that lateral openings of one of the rows is arranged adjacent to an intermediate space between two lateral openings of a consecutive row. It is conceivable that two, three, four or even more rows of lateral openings may be arranged on the respective lateral delimiting surface.

In an advantageous embodiment, the axial openings of a respective main boundary surface are arranged in a matrix having a plurality of parallel main columns and a plurality of main rows. A substantial part of the respective main boundary surface may be provided with axial openings to provide an improved distribution of reactants. A ratio of a total surface of the axial openings to the respective main boundary surface may be above 25%, in particular above 33% and preferably up to 50%.

In an advantageous embodiment, the number of lateral openings in a respective lateral row corresponds to the number of axial openings in a respective axial row or column. This may particularly be the case if each lateral opening leads to an individual internal distribution channel. As the internal distribution channel may extend through the interior space parallel to each other, several axial openings may connect to each of the internal distribution channel and thus forming a row or column, depending on the viewing direction of the bipolar plate. It may be beneficial to provide a distance between consecutive internal distribution channels that equals a distance of two subsequent axial openings of each of the row or columns.

In an advantageous embodiment, a diameter of the internal distribution channels exceeds a diameter of the lateral openings and/or of the axial openings. Hence, the flow resistance in the internal distribution channels may be reduced. By reducing the size of the axial openings it is conceivable that the internal distribution channels act as a manifold, in which a certain pressure is created, leading to a pressure differential over the individual axial openings. Slightly increasing the pressure differential by slightly decreasing the size of the axial openings may lead to a more even distribution of flow over all axial openings connected to the respective internal distribution channel. Still further, peak mechanical stresses at edges of the axial openings can be further reduced.

In an advantageous embodiment, the bipolar plate is made by a 3D printing process. The design according to the invention is hardly possible to realize with extrusion or milling processes. The multitude of particularly fine internal distribution channels can be built with a high accuracy and with small internal dimensions, e.g. through using a powder bed process. Furthermore, the additively manufactured bipolar plate with internal gas diffusion channels displays a more uniformly distributed contacting area in its function as a current collector as well and thus collects more energy from the electro-chemical reactions. The proposed design, however, is hardly possible with extrusion or milling. Additive manufacturing allows to create the multitude of finer internal channels. These can be built with a high accuracy and with small internal dimensions, e.g. by powder bed processes of both metallic material or e.g. carbon fiber reinforced plastic material.

The invention further relates to a fuel cell stack, comprising at least one bipolar plate according to the above.

The invention also relates to an aircraft, comprising a fuel cell system having at least one fuel cell stack according to the above and/or at least one bipolar plate according to the previous description.

### Brief description of the figures

In the following, the attached drawings are used to illustrate exemplary embodiments in more detail. The illustrations are schematic and not to scale. Identical reference numerals refer to identical or similar elements. They show:
- Fig. 1a-1b: a bipolar plate and a sectional view thereof.
- Fig. 2a-2c: sectional view of the bipolar plate.
- Fig. 3a-3b: a comparison of peak stresses in sectional views.
- Fig. 4: a system for manufacturing a bipolar plate.
- Fig. 5: a fuel cell stack.
- Fig. 6: an aircraft.

### Detailed description of exemplary embodiments

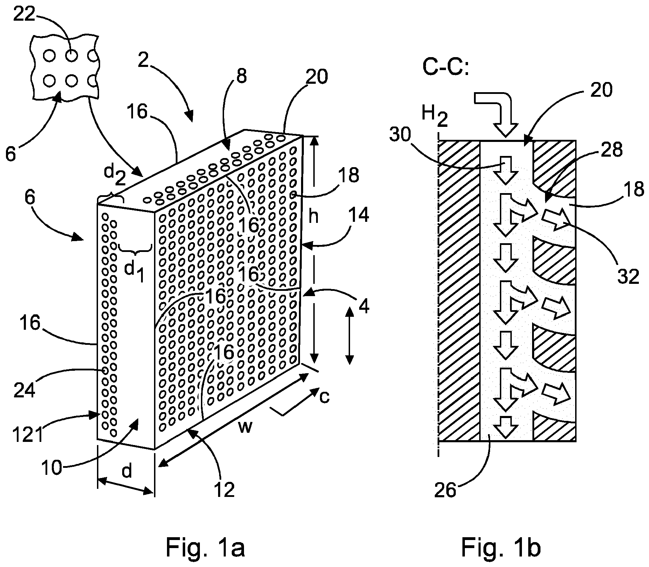

Fig. 1 a shows a bipolar plate 2 having a first main boundary surface 4 and a second main boundary surface 6. In this example, the bipolar plate 2 is of a cuboid shape and has a rectangular footprint, i.e. both main boundary surfaces are rectangular. The main boundary surfaces 4 and 6 are arranged parallel to each other and enclose a distance d, which is clearly exceeded by their width w and height h. The bipolar plate 2 thus is a more or less flat plate. The bipolar plate 2 may be made of a metallic material. As an alternative, it may be made from a composite having an electrical conductivity sufficient for acting as bipolar plate.

The bipolar plate 2 has four lateral delimiting surfaces 8, 10, 12 and 14, which delimit the bipolar plate 2 in lateral directions and constitute an outer border. They follow on each other, enclose an angle of 90° between each other and extend between opposed outer edges 16 of the main boundary surfaces 4 and 6.

In this exemplary embodiment, the first main boundary surface 4 comprises a plurality of first axial openings 18 that are arranged in form of a matrix having a plurality of columns in the height direction, i.e. vertically in the drawing plane, and rows in the width direction, i.e. horizontally in the drawing plane. Exemplarily, the first axial openings 18 are distributed uniformly over the whole first main boundary surface 4. The surface ratio of all first axial openings 18 to the total surface of the first main boundary surface 4 may be about 25% to 33%.

A first lateral delimiting surface 8 in turn comprises a plurality of first lateral openings 20 provided in two adjacent lateral rows extending along the first lateral delimiting surface 8 in the width direction. The first lateral openings 20 are exemplary only arranged in a first section d1 of the bipolar plate 2 in the thickness direction. Hence, the first lateral openings 20 are only arranged in a region near the first main boundary surface 4 and do not extend over a center plane parallel to and in the center between both boundary surfaces 4 and 6.

In analogy to this, the second main boundary surface 6 comprises a plurality of second axial openings 22, which are distributed over the second main boundary surface 6 similarly to the first axial openings 18 on the first main boundary surface 4. A second lateral delimiting surface 10, which is shown on the left hand side of the drawing, comprises a plurality of second lateral openings 24 in two adjacent rows extending along the second lateral delimiting surface 10. The second lateral openings 24 are arranged in a second section d2 in the thickness direction, such that they are arranged only near the second main boundary surface 6 between the second main boundary surface 6 and above-mentioned center plane.

As shown in fig. 1b, the first axial openings 18 are in fluid connection with the first lateral openings 20 through first internal distribution channels 26. For this, each first lateral opening 20 leads into an individual first distribution channel 26 that substantially extends through the whole bipolar plate 2 in the height direction. For providing the fluid connection, each first axial opening 18 stems from a branch 28, which exemplary has a curved shape that transitions between a flow direction 30 of the respective first internal distribution channel 26 and an outflow axis 32 of the respective axial opening 18. The branches 28 in turn are run into the respective first distribution channel 26.

The same applies to the second axial openings 22. They are connected to a plurality of second internal distribution channels (not shown) through branches (not shown) in an analogous way.

Hence, reactants may be fed into the first lateral openings 20 and the second lateral openings 24 and flow out of the first axial openings 18 and the second axial openings 22. On sides opposite to the first lateral delimiting surface 8 and the second lateral delimiting surface 10 identical lateral opening arrangements may be provided in which the internal distribution channels end to allow excess reactants to flow out of the bipolar plate 2 for reuse.

By providing the first axial openings 18 and the second axial openings 22 in a relatively large number distributed over the whole main boundary surfaces 4 and 6, the reactants may be very evenly distributed over these surfaces 4 and 6, which optimizes the supply of the associated fuel cell and at the same time maintaining a large contact area for conducting an electrical current.

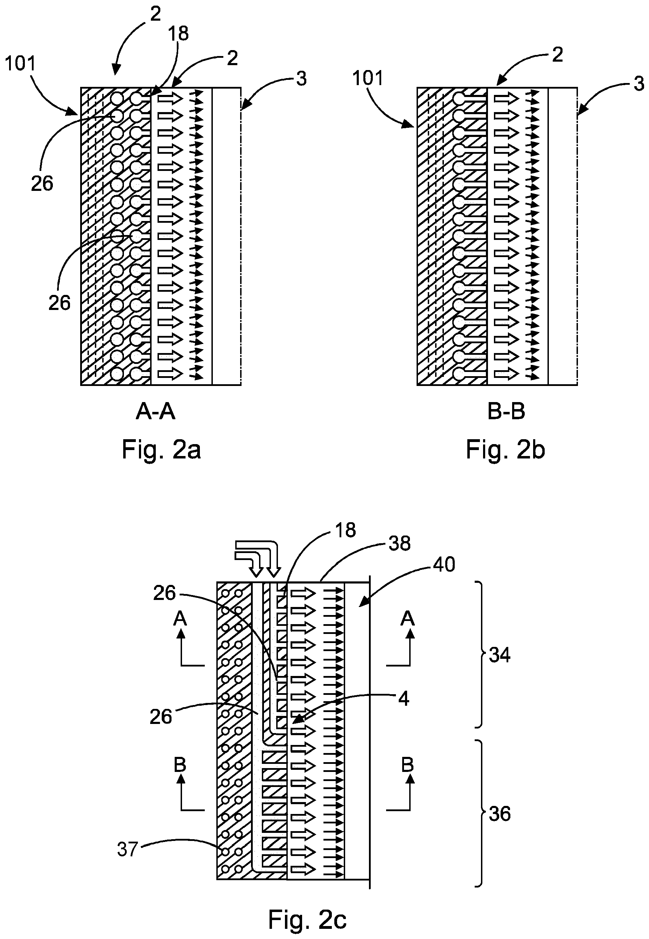

Fig. 2a shows the bipolar plate in a sectional view according to the sectional plane A-A indicated in fig. 2c. Here, two first internal distribution channels 26 are shown parallel and behind each other in the width direction of the bipolar plate 2. One of the first internal distribution channels 26 is associated with a first group 34 of first axial openings 18, while the other first internal distribution channel 26 is associated with a second group 36 of first axial openings 18.

Further, an electrode 38 is shown, which is in contact with the first main boundary surface 4, and which is followed by a membrane 40 of a fuel cell stack. Here, the first axial openings 18 comprise a diameter that is smaller than a diameter of the respective distribution channel 26. Furthermore, Fig. 2c indicates second internal distribution channels 37.

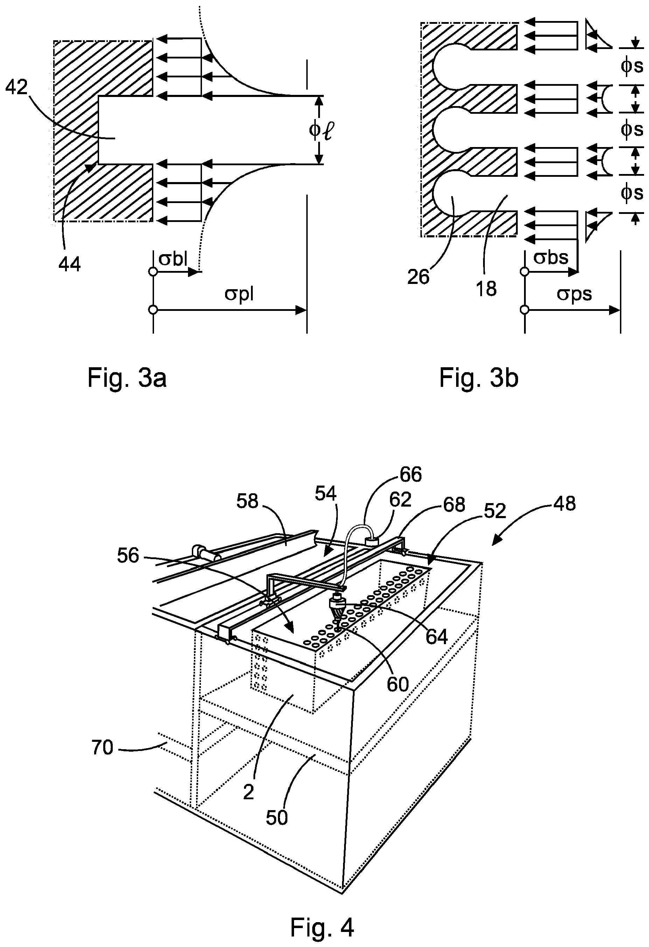

In conventional bipolar plates, shown in a sectional view in Fig. 2a, often longitudinal grooves 42 with a comparably large opening measure are used to distribute reactants. This leads to a peak stress σₚₗ in an edge region 44, which clearly exceeds a basic stress σ_{bl} of the remaining areas and a peak stress σₚₛ of the first axial openings 18, which have comparably small opening measures, in an edge region 46 as shown in fig. 3b, which peak stress σₚₛ is not much higher than a basic stress σ_{bs} of the remaining areas.

Fig. 4 shows a system 48 for manufacturing a bipolar plate 2 according to the above description. The system 48 is capable of 3D printing the bipolar plate 2 as an integral component in a layer-wise buildup process, i.e. an additive manufacturing process. In this illustration, only a part of the bipolar plate 2 has been manufactured already and is placed on a lowering table 50 in a build chamber 52. A layer of material powder, such as a metal powder, is applied from a powder chamber 54 onto a top 56 of the bipolar plate 2 in process through a powder shovel 58. Afterwards, a laser beam 60 is used for selectively sintering or melting the layer. The laser beam 60 may be provided by a laser source 62 and transferred to a lens 64 through an optical fibers 66. The lens 64 is exemplarily mounted on a movable traverse system 68 that allows a controlled movement of the lens 64 above the bipolar plate 2 in process. After application of a powder layer to the build chamber 52, a powder chamber table 70 may be moved upwards about a distance that equals a thickness of the powder layer to prepare the powder chamber 54 for the application of the next layer of powder. Of course, other 3D printing processes are usable.

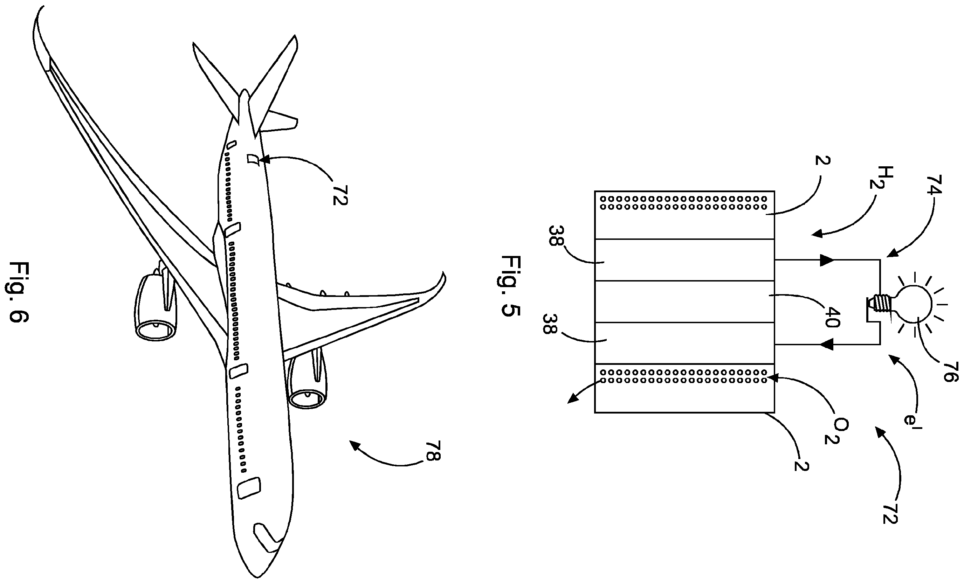

Fig. 5 shows an exemplary embodiment of a part of a fuel cell stack 72, which comprises two bipolar plates 2 that enclose two electrodes 38 and a membrane 40. On the left hand side of the drawing, hydrogen is fed into the bipolar plate 2. On the right hand side of the drawing, oxygen is fed into the bipolar plate 2. An electric circuit 74 is created with the two electrodes 38 and having an electrical consumer 76.

Lastly, fig. 6 shows an aircraft 78, which exemplarily comprises at least one fuel cell stack 72, which is merely exemplarily located at a rear end of the aircraft 78.

### Reference numerals

- 2: bipolar plate
- 4: first main boundary surface
- 6: second main boundary surface
- 8: first lateral delimiting surface
- 10: second lateral delimiting surface
- 12: lateral delimiting surface
- 14: lateral delimiting surface
- 16: outer edge
- 18: first axial opening
- 20: first lateral opening
- 22: second axial opening
- 24: second lateral opening
- 26: first internal distribution channel
- 28: branch
- 30: flow direction
- 32: outflow axis
- 34: first group of first axial openings
- 36: second group of first axial openings
- 37: second internal distribution channel
- 38: electrode
- 40: membrane
- 42: longitudinal groove (prior art)
- 44: edge region (prior art)
- 46: edge region
- 48: system for manufacturing
- 50: lowering table
- 52: build chamber
- 54: powder chamber
- 56: top
- 58: powder shovel
- 60: laser beam
- 62: laser source
- 64: lens
- 66: optical fiber
- 68: movable traverse system
- 70: powder chamber table
- 72: fuel cell stack
- 74: electric circuit
- 76: electrical consumer
- 78: aircraft

## Claims

1. Bipolar plate (2) for a fuel cell stack, the bipolar plate (2) comprising:
a first main boundary surface (4),
a second main boundary surface (6),
wherein the first and second main boundary surfaces (4, 6) are arranged parallel and at a distance to each other and define an interior space,
wherein a plurality of lateral delimiting surfaces (8, 10, 12, 14) extend between outer edges (16) of the first and second main boundary surfaces (4, 6) to enclose the interior space,
wherein at least one of the lateral delimiting surfaces (8, 10, 12, 14) comprises a plurality of lateral openings (20, 24),
wherein the at least one of the main boundary surfaces (4, 6) comprises a plurality of axial openings (18, 22),
wherein a plurality of internal distribution channels (26) are arranged inside the interior space in a distance to the first main boundary surface (4) and the second main boundary surface (6), and
wherein the lateral openings (20, 24) of each of the at least one lateral delimiting surfaces (8, 10, 12, 14) are in fluid connection with the axial openings (18, 22) of one of the at least one main boundary surfaces (4, 6) through at least a part of the internal distribution channels (26).

2. Bipolar plate (2) according to claim 1,
wherein a first lateral delimiting surface (8) comprises a plurality of first lateral openings (20, 24),
wherein a second lateral delimiting surface (10) comprises a plurality of second lateral openings (24),
wherein the first main boundary surface (4) comprises a plurality of first axial openings (18),
wherein the second main boundary surface (6) comprises a plurality of second axial openings (22),
wherein first internal distribution channels (26) and second internal distribution channels (37) are arranged inside the interior space,
wherein the first lateral openings (20, 24) are connected to the first axial openings (18) through the first internal distribution channels (26), and
wherein the second lateral openings (24) are connected to the second axial openings (22) through the second internal distribution channels (37).

3. Bipolar plate (2) according to claim 2,
wherein the first lateral delimiting surface (8) and the second lateral delimiting surface (10) follow on each other in a circumferential direction and are arranged at an angle of 60° to 120° to each other.

4. Bipolar plate (2) according to claim 2 or 3,
wherein the first lateral openings (20) and the first internal distribution channels (26) are arranged further to the first main boundary surface (4) than to the second main boundary surface (6),
wherein the second lateral openings (24) and the second internal distribution channels (37) are arranged further to the second main boundary surface (6) than to the first main boundary surface (4), and
wherein the first internal distribution channels (26) and the second internal distribution channels (37) are arranged at a distance to each other.

5. Bipolar plate (2) according to any of the preceding claims,
wherein the internal distribution channels (26) associated with the lateral openings (20, 24) of each of the at least one lateral delimiting surfaces (8, 10, 12, 14) are arranged parallel to each other.

6. Bipolar plate (2) according to any of the preceding claims,
wherein the internal distribution channels (26) are straight, and
wherein each associated axial opening (18, 22) of the respective main boundary surface (4, 6) is in fluid connection with the respective internal distribution channel (26) through a branch (28) merging into the respective internal distribution channel (26).

7. Bipolar plate (2) according to claim 6,
wherein the branch (28) has a curved shape that transitions between an intended flow direction (30) of a respective internal distribution channel (26) and an outflow axis (32) of the respective axial opening (18, 22).

8. Bipolar plate (2) according to any of the preceding claims,
wherein each lateral opening (20, 24) is associated with one internal distribution channel (26).

9. Bipolar plate (2) according to any of the preceding claims,
wherein the lateral openings (20, 24) of a respective lateral surface (8, 10, 12, 14) are arranged in a plurality of parallel lateral rows.

10. Bipolar plate (2) according to any of the preceding claims,
wherein the axial openings (18, 22) of a respective main boundary surface (4, 6) are arranged in a matrix having a plurality of parallel main columns and a plurality of main rows.

11. Bipolar plate (2) according to claim 9 and 10,
wherein the number of lateral openings (20, 24) in a respective lateral row corresponds to the number of axial openings (18, 22) in a respective axial row or column.

12. Bipolar plate (2) according to any of the preceding claims,
wherein a diameter of the internal distribution channels (26) exceeds a diameter of the lateral openings (20, 24) and/or of the axial openings (18, 22).

13. Bipolar plate (2) according to any of the preceding claims,
wherein the bipolar plate (2) is made by a 3D printing process.

14. Fuel cell stack (72), comprising at least one bipolar plate (2) according to the preceding claims.

15. Aircraft (78), comprising a fuel cell system having at least one fuel cell stack (72) of claim 14 and/or at least one bipolar plate (2) according to any of the claims 1 to 13.
